# EUROPÄISCHE PATENTSCHRIFT

(11) **EP 2 148 014 B1**
(45) Veröffentlichungstag und Bekanntmachung des Hinweises auf die Patenterteilung: **29.12.2021**
(21) Anmeldenummer: 09008879.0
(22) Anmeldetag: 07.07.2009
(51) Int. Cl.: E02F 9/22, E02F 3/38

(54) **ARBEITSGERÄT**
WORK DEVICE
APPAREIL DE TRAVAIL

(30) Priorität: 24.07.2008 DE 102008034582
(43) Veröffentlichungstag der Anmeldung: 27.01.2010
(73) Patentinhaber: Liebherr-Hydraulikbagger GmbH, 88457 Kirchdorf (DE)
(72) Erfinder: Stanger, Sebastian, 72766 Reutlingen (DE); Wager, Bernd, 88457 Kirchdorf (DE); Asam, Dirk, 89081 Ulm (DE); Lavergne, Hans-Peter, 87779 Trunkelsberg (DE)
(74) Vertreter: Laufhütte, Dieter

(56) Entgegenhaltungen:
- EP-A2- 1 614 814
- WO-A1-2008/013466
- DE-A1-102004 052 269
- DE-A1-102007 050 350
- FR-A1- 2 398 850
- GB-A- 485 617
- US-A- 2 163 982
- US-A- 3 869 861
- US-A- 5 921 604
- US-B1- 6 918 247

## Beschreibung

Die vorliegende Erfindung betrifft ein Arbeitsgerät, insbesondere ein verfahrbares Arbeitsgerät, insbesondere einen Bagger oder eine Maschine zum Materialumschlag, mit einem über mindestens einen Arbeits-Hydraulikzylinder bewegbaren Element, wobei mindestens ein Energierückgewinnungs-Hydraulikzylinder zur Energierückgewinnung aus der Bewegung des bewegbaren Elements vorgesehen ist.

Aus DE 10 2004 032 868 A 1 ist dabei ein Bagger bekannt, bei welchem neben den Hubzylindern ein Energierückgewinnungs-Hydraulikzylinder zwischen Oberwagen und Baggerausleger vorgesehen ist, dessen Bodenseite über Ventile und Hydraulikleitungen mit einem Hydraulikspeicher in Verbindung steht. Bei einem Absenken des Baggerauslegers wird so durch die Bewegung der Kolbenstange gegen den Zylinderboden Hydraulikflüssigkeit in den Hydraulikspeicher gedrückt. Bei einer Bewegung in die Gegenrichtung unterstützt der Energierückgewinnungs-Hydraulikzylinder über die im Hydraulikspeicher gespeicherte Hydraulikflüssigkeit dann die Bewegung des Baggerauslegers nach oben. Das vorbekannte System benötigt jedoch eine Vielzahl von Komponenten, was die Herstellung und den Einbau aufwendig und teuer macht. Zudem ergeben sich hohe Wartungskosten und

keine optimale Energierückgewinnung.

Weitere Systeme zur Energierückgewinnung bei Arbeitsgeräten sind aus den Dokumenten US 6 918 247 B1 und WO 2008/013466 A1 bekannt.

Aufgabe der vorliegenden Erfindung ist es daher, ein Arbeitsgerät mit einem Energierückgewinnungs-Hydraulikzylinder zur Verfügung zu stellen, welches eine effiziente und kostengünstige Energierückgewinnung ermöglicht.

Diese Aufgabe wird von einem Arbeitsgerät gemäß Anspruch 1 oder 2 gelöst. Das erfindungsgemäße Arbeitsgerät, insbesondere ein verfahrbares Arbeitsgerät, insbesondere ein Bagger oder eine Maschine zum Materialumschlag, weist dabei ein über mindestens einen Arbeits-Hydraulikzylinder bewegbares Element auf, wobei mindestens ein Energierückgewinnungs-Hydraulikzylinder zur Energierückgewinnung aus der Bewegung des bewegbaren Elements vorgesehen ist. Erfindungsgemäß ist dabei der Energierückgewinnungs-Hydraulikzylinder bodenseitig mit Gas befüllt und weist eine hohle Kolbenstange auf. Durch den erfindungsgemäßen Energierückgewinnungs-Hydraulikzylinder kann auf einen Hydraulikspeicher inklusive Befestigungsteilen, Schlauchleitungen und Ventilen verzichtet werden. Dabei dient der Energierückgewinnungs-Hydraulikzylinder mit der bodenseitigen Gasbefüllung selbst als Energiespeicher für die Energierückgewinnung aus der Bewegung des bewegbaren Elements. Der von der Bodenseite und der hohlen Kolbenstange des Energierückgewinnungs-Hydraulikzylinders gebildete Raum ist dabei mit unter Druck stehendem Gas befüllt, welches bei einer Bewegung der Kolbenstange gegen den Boden komprimiert wird. Die dabei gespeicherte Energie steht dann bei einer Aufwärtsbewegung der Kolbenstange zur Unterstützung des Arbeits-Hydraulikzylinders wieder zur Verfügung. Durch die hohle, zur Bodenseite hin offene Kolbenstange steht dabei auch bei eingefahrenem Zylinder ausreichend Gasvolumen zur Verfügung. Hierdurch ergibt sich eine optimale Energierückgewinnung und ein flacher Druckanstieg beim Senken des bewegbaren Elements.

Gegenüber bekannten Systemen mit einem Hydraulikspeicher ergibt sich damit ein erheblich kompakteres und kostengünstigeres System mit Vorteilen bezüglich Bauraum, Gewicht, Herstellungs- und Montagekosten. Zudem sind auch die Wartungskosten niedriger, da der sonst für den Hydraulikspeicher erforderliche Dichtungswechsel entfällt. Zudem werden Druckverluste zwischen dem Zylinder und einem Speicher, wie sie im Stand der Technik unvermeidlich sind, vermieden.

Das bewegbare Element des erfindungsgemäßen Arbeitsgerätes ist dabei üblicherweise am Arbeitsgerät um eine vertikale Drehachse schwenkbar angelenkt und über den oder die Arbeits-Hydraulikzylinder in einer vertikalen Schwenkebene verschwenkbar. Insbesondere handelt es sich bei dem bewegbaren Element dabei um den Stiel eines Baggers oder den Ausleger einer Maschine zum Materialumschlag. Am bewegbaren Element ist dabei üblicherweise ein Arbeitswerkzeug, zum Beispiel eine Schaufel oder ein Greifer, angeordnet. Beim Absenken des bewegbaren Elementes wird die potentielle Energie des bewegbaren Elementes und des Arbeitswerkzeugs über den Energierückgewinnungs-Hydraulikzylinder gespeichert, um bei der Aufwärtsbewegung des bewegbaren Elements das Ausrüstungsgewicht zumindest teilweise wieder zu kompensieren. Hierdurch muß über die Arbeits-Hydraulikzylinder weniger Energie aufgewendet werden, um das bewegbare Element nach oben zu bewegen. Hierdurch verbessert sich die Energiebilanz des Arbeitsgerätes, da weniger installierte Motorleistung benötigt wird und der Kraftstoffverbrauch gesenkt wird.

Der erfindungsgemäße Energierückgewinnungs-Hydraulikzylinder ist dabei vorteilhafterweise wie der oder die Arbeits-Hydraulikzylindern zwischen einem Oberwagen des Arbeitsgerätes und dem bewegbaren Element angeordnet. Der Energierückgewinnungs-Hydraulikzylinder bewegt sich damit bei einer Bewegung des bewegbaren Elementes gleichzeitig zum Arbeits-Hydraulikzylinder.

Bei dem Arbeitsgerät handelt es sich dabei vorteilhafterweise um ein verfahrbares Arbeitsgerät, insbesondere um einen Bagger oder ein verfahrbares Arbeitsgerät zum Materialumschlag. Weiterhin vorteilhafterweise weist das verfahrbare Arbeitsgerät dabei einen Unterwagen mit Fahrwerk und einen darauf um eine vertikale Drehachse drehbar angeordneten Oberwagen auf, an welchem das bewegliche Element angelenkt ist.

Weiterhin vorteilhafterweise weist der Energierückgewinnungs-Hydraulikzylinder ringseitig einen Anschluß zur Versorgung mit Öl auf, über welchen der Ringraum des Energierückgewinnungs-Hydraulikzylinders an ein Hydrauliksystem des Arbeitsgerätes anschließbar und/oder angeschlossen ist. Hierdurch kann der erfindungsgemäße Energierückgewinnungs-Hydraulikzylinder neben der reinen Energierückgewinnungsfunktion auch für weitere Aufgaben eingesetzt werden. Vorteilhafterweise liegt der Ringraum des Energierückgewinnungs-Hydraulikzylinders dabei für die Energierückgewinnung auf Rücklaufdruck, so daß er dem komprimierten Gas im Bodenraum und in der hohlen Kolbenstange des Energierückgewinnungs-Hydraulikzylinders und damit der Aufwärtsbewegung der Kolbenstange nur einen minimalen Widerstand entgegensetzt. Der Hydraulikölstrom in und aus der Ringseite des Energierückgewinnungs-Hydraulikzylinders kann jedoch auch zur Steuerung der Bewegung des Energierückgewinnungs-Hydraulikzylinders selbst oder weiterer Komponenten eingesetzt werden.

Weiterhin vorteilhafterweise weist der erfindungsgemäße Energierückgewinnungs-Hydraulikzylinder ein Befüllventil zum Befüllen mit Gas und/oder ein Druckbegrenzungsventil auf, welche vorteilhafterweise bodenseitig angeordnet sind. Über das Befüllventil kann so die Bodenseite mit Gas befüllt werden. Das Druckbegrenzungsventil sichert dagegen den erfindungsgemäßen Energierückgewinnungs-Hydraulikzylinder gegen Überdruck.

Erfindungsgemäß ist dabei der Energierückgewinnungs-Hydraulikzylinder so ausgeführt und so an ein Hydrauliksystem des Arbeitsgerätes angeschlossen, daß das über die Bewegung der Kolbenstange komprimierbare Gasvolumen im Energierückgewinnungs-Hydraulikzylinder durch Zuführen oder Abführen von Öl zum Energierückgewinnungs-Hydraulikzylinder veränderbar ist. Durch die Zugabe oder das Abführen einer Ölmenge zum Energierückgewinnungs-Hydraulikzylinder kann so die Speicherkennlinie des Energierückgewinnungs-Hydraulikzylinders eingestellt werden.

Vorteilhafterweise ist dabei eine Steuerungsvorrichtung vorgesehen, über welche die Zu- bzw. Abfuhr von Öl zum Energierückgewinnungs-Hydraulikzylinder und damit das komprimierbare Gasvolumen im Energierückgewinnungs-Hydraulikzylinder und damit dessen Kennlinie steuert.

In einem nicht unter den Wortlaut der Ansprüche fallendem Ausführungsbeispiel kann das Öl dabei direkt in den Bodenraum des Energierückgewinnungs-Hydraulikzylinders gefüllt werden, wofür dieser vorteilhafterweise einen Anschluß aufweist, welcher an ein Hydrauliksystem des erfindungsgemäßen Arbeitsgerätes angeschlossen ist.

Gemäß der in Anspruch 1 definierten ersten alternativen Ausführungsform der Erfindung ist in der hohlen Kolbenstange des Energierückgewinnungs-Hydraulikzylinders ein längs der Kolbenstange beweglicher Trennkolben vorgesehen, welcher einen in der hohlen Kolbenstange vorgesehenen mit Öl gefüllten Raum von der mit Gas befüllten Bodenseite des Energierückgewinnungs-Hydraulikzylinders trennt. Vorteilhafterweise weist der mit Öl gefüllte Raum dabei einen Anschluß zu Versorgung mit Öl auf, so daß die Position des Trennkolbens längs der Kolbenstange über die Befüllmenge des mit Öl gefüllten Raums einstellbar ist. Hierdurch kann durch die Veränderung der Ölmenge im mit Öl gefüllten Raum die Position des Trennkolbens und damit das Gasvolumen im Energierückgewinnungs-Hydraulikzylinder verändert werden. Vorteilhafterweise ist dabei der Anschluß des mit Öl gefüllten Raumes im Bereich des Lagerauges der Kolbenstange vorgesehen.

Durch die Veränderung des Gasvolumens im Energierückgewinnungs-Hydraulikzylinder kann so eine flachere oder steilere Druckkennlinie beim Senken bzw. Heben des bewegbaren Elementes eingestellt und damit eine Anpassung an die Einsatzbedingungen erreicht werden.

Weiterhin vorteilhafterweise sind zwei oder mehr Energierückgewinnungs-Hydraulikzylinder vorgesehen, welche ölhydraulisch miteinander in Wirkverbindung stehen. Dies ermöglicht z.B. eine Veränderung des komprimierbaren Gasvolumens während der Bewegung der Energierückgewinnungs-Hydraulikzylinder, so daß eine verbesserte Energierückgewinnung möglich wird. Vorteilhafterweise ist dabei ein Energierückgewinnungs-Hydraulikzylinder mit Trennkolben, wie er oben beschrieben wurde, vorgesehen, dessen mit Öl gefüllter Raum mit der Ringseite eines weiteren Energierückgewinnungs-Hydraulikzylinders verbunden ist. Beim Anheben des beweglichen Elementes wird so Öl aus der Ringseite des zweiten Energierückgewinnungs-Hydraulikzylinders in den mit Öl gefüllten Raum des ersten Hydraulikzylinders gepreßt, so daß der Druck im mit Gas gefüllten Bodenraum des ersten Energierückgewinnungs-Hydraulikzylinders weniger stark abfällt. Beim Senken des bewegbaren Elements steigt umgekehrt der Druck weniger stark an. Vorteilhafterweise handelt es sich dabei bei dem zweiten Energierückgewinnungs-Hydraulikzylinder um einen Hydraulikzylinder, wie er oben beschrieben wurde, welcher bodenseitig ebenfalls mit Gas befüllt ist und eine hohle, zur bodenseitigen offene Kolbenstange aufweist. Durch die Kombination mehrerer Energierückgewinnungs-Hydraulikzylinder, welche ölhydraulisch miteinander in Wirkverbindung stehen, wird so eine höhere Energierückgewinnung ermöglicht.

Gemäß der in Anspruch 2 definierten zweiten alternativen Ausführungsform der Erfindung ist im Ringraum des Energierückgewinnungs-Hydraulikzylinders ein längs der Kolbenstange beweglicher Trennkolben vorgesehen, welcher einen mit Gas gefüllten Teil des Ringraumes von einem mit Öl gefüllten Teil des Ringraumes trennt. Auch hierdurch läßt sich das Gasvolumen im Energierückgewinnungs-Hydraulikzylinder verändern. Vorteilhafterweise ist dabei der mit Gas gefüllte Teil des Ringraumes mit der Bodenseite des Energierückgewinnungs-Hydraulikzylinders über Überströmungsöffnungen verbunden.

Weiterhin vorteilhafterweise weist der Energierückgewinnungs-Hydraulikzylinder bodenseitig einen Anschluß zu Versorgung mit Öl auf, über welchen der Bodenraum des Energierückgewinnungs-Hydraulikzylinders an ein Hydrauliksystem des Arbeitsgerätes anschließbar ist. Zum einen läßt sich hierdurch Öl in den Bodenraum des Energierückgewinnungs-Hydraulikzylinders zu- und abführen, um das Gasvolumen im Energierückgewinnungs-Hydraulikzylinder einzustellen. Weiterhin kann der Energierückgewinnungs-Hydraulikzylinder durch den Anschluss neben seiner passiven Funktion als Energiespeicher auch zu einer aktiven Unterstützung der Bewegung des bewegbaren Elementes eingesetzt werden.

Vorteilhafterweise ist dabei der Energierückgewinnungs-Hydraulikzylinder über Ventile mit der Arbeitshydrauliksteuerung des Arbeitsgerätes verbindbar und zur Unterstützung des Arbeits-Hydraulikzylinders mit Öl beaufschlagbar. Dies ist insbesondere bei Verlust des Gasdrucks von großem Vorteil. Der Energierückgewinnungs-Hydraulikzylinder kann dann mit dem die Arbeits-Hydraulikzylinder versorgenden Hydraulikkreislauf verbunden werden und den Arbeits-Hydraulikzylinder unterstützen. Hierdurch kann bis zum Eintreffen eines Monteurs weiter gearbeitet werden. Dies hat den Vorteil, daß der oder die Arbeits-Hydraulikzylinder nicht so groß dimensioniert werden müssen, daß sie im Notfall die Arbeitsbelastung auch ohne eine Unterstützung über den Energierückgewinnungs-Hydraulikzylinder bewältigen könnten.

Wie bereits beschrieben, wird der erfindungsgemäße Energierückgewinnungs-Hydraulikzylinder vorteilhafterweise in gleicher Weise wie der oder die Arbeits-Hydraulikzylindern zwischen Arbeitsgerät und bewegbarem Element angeordnet. Vorteilhafterweise dienen die Arbeits-Hydraulikzylinder dabei dem Heben und Senken des bewegbaren Elements, insbesondere eines um eine horizontale Drehachse am Arbeitsgerät angelenkten bewegbaren Elementes, insbesondere eines Stiels eines Hydraulikbaggers oder eines Auslegers. Üblicherweise sind dabei zwei Arbeits-Hydraulikzylinder vorgesehen.

Die vorliegende Erfindung zeigt dabei weiterhin vorteilhafte Anlenkungen des oder der Energierückgewinnungs-Hydraulikzylinder und des oder der Arbeits-Hydraulikzylinder am Arbeitsgerät. Diese Anlenkungen sind dabei offensichtlich auch unabhängig von der Ausgestaltung des Energierückgewinnungs-Hydraulikzylinders mit einer mit Gas befüllten Bodenseite und einer hohlen Kolbenstange von Vorteil, so daß für diese Anlenkungsmöglichkeiten selbstständiger Schutz beansprucht wird.

Vorteilhafterweise umfaßt das bewegbare Element des erfindungsgemäßen Arbeitsgerätes dabei eine Kastenkonstruktion mit zwei Seitenwangen, wobei der oder die Energierückgewinnungs-Hydraulikzylinder und/oder der oder die Arbeits-Hydraulikzylinder über ein die Seitenwangen verbindendes Rohr am beweglichen Element angelenkt sind. Hierdurch ergibt sich eine besonders stabile Konstruktion. Vorteilhafterweise sind dabei sowohl die Energierückgewinnungs-Hydraulikzylinder als auch die Arbeits-Hydraulikzylinder über das Rohr am beweglichen Element angelenkt.

Vorteilhafterweise ist der Energierückgewinnungs-Hydraulikzylinder mittels Laschen, welche mit dem Rohr verschweißt sind, an diesem angelenkt. Weiterhin vorteilhafterweise ist der Energierückgewinnungs-Hydraulikzylinder zwischen den beiden Seitenwangen am Rohr angeordnet, während die Arbeitszylinder seitlich angeordnet sind, so daß geringere Biegemomente im Rohr entstehen. Hierdurch kann dieses geringer dimensioniert werden, als wenn nur wie in bekannten Anordnungen zwei Arbeits-Hydraulikzylinder seitlich außerhalb der Seitenwangen angeordnet würden.

Vorteilhafterweise ist das Rohr durch Aussparungen in den Seitenwangen geführt, wobei außerhalb der Seitenwangen am Rohr Laschen angeordnet sind, an welchen die Arbeits-Hydraulikzylinder oder die Energierückgewinnungs-Hydraulikzylinder angelenkt sind. Vorteilhafterweise sind es dabei die Arbeits-Hydraulikzylinder, welche an den Laschen seitlich der Seitenwangen angelenkt sind.

Alternativ ist das Rohr durch Aussparungen in den Seitenwangen geführt und die Arbeits-Hydraulikzylinder oder die Energierückgewinnungs-Hydraulikzylinder sind mittels eines in dem Rohr geführten Bolzens seitlich der Seitenwangen angelenkt. Der Bolzen kann dabei direkt im Rohr geführt sein. Eine solche Anlenkung mittels eines Bolzens, welcher vorteilhafterweise durch die Kastenkonstruktion hindurch geführt ist, ermöglicht dabei eine Alternative zur Anlenkung insbesondere der Arbeits-Hydraulikzylinder mittels Laschen.

Alternativ oder zusätzlich sind Gußteile zur Lagerung eines Bolzens vorgesehen, an welchem die Arbeits-Hydraulikzylinder oder die Energierückgewinnungs-Hydraulikzylinder angelenkt sind, wobei die Gußteile vorteilhafterweise mit Aussparungen in den Seitenwangen und/oder einem durch Aussparungen in den Seitenwangen geführten Rohr verschweißt sind. Die Gußteile ermöglichen dabei ebenfalls eine gute Lagerung eines Bolzens, an welchem insbesondere die Arbeits-Hydraulikzylinder angelenkt werden können, wobei der Bolzen wiederum vorteilhafterweise durch die Kastenkonstruktion hindurch geführt ist. Vorteilhafterweise kommt dabei wiederum ein die Seitenwangen verbindendes Rohr zum Einsatz, um die Stabilität zu erhöhen. Die Gußteile können dabei mit dem Rohr selbst und/oder mit Aussparungen in den Seitenwangen der Kastenkonstruktion verschweißt sein.

Weiterhin vorteilhafterweise weist die Kastenkonstruktion einen Untergurt auf, welcher aus mindestens zwei Blechen gefertigt ist, die mit dem Rohr verschweißt sind. Vorteilhafterweise weist mindestens eines der Bleche dabei Aussparungen im Bereich des Rohres auf, durch welche Laschen zum Anlenken des oder der Arbeits-Hydraulikzylinder und/oder des oder der Energierückgewinnungs-Hydraulikzylinder hindurch geführt sind, wobei die Laschen vorteilhafterweise mit dem oder den Blechen verschweißt sind. Das die Seitenwangen verbindende Rohr ist damit teilweise innerhalb der Kastenkonstruktion geführt, wobei Laschen zum Anlenken insbesondere des Arbeits-Hydraulikzylinders vorgesehen sind, welche am Rohr angreifen und durch die Aussparungen in den Bodenblechen des Untergurtes geführt sind. Die Aussparungen im Untergurt ermöglichen dabei eine bessere Anbindung der Laschen, da diese großflächig mit dem Rohr verbunden werden können.

Alternativ ist das die Seitenwangen verbindende Rohr unterhalb des Untergurtes geführt, wobei der oder die Energierückgewinnungs-Hydraulikzylinder und/oder der oder die Arbeits-Hydraulikzylinder zwischen den Seitenwangen mittels Laschen an dem Rohr angelenkt sind. Hierdurch müssen die Laschen zum Anlenken insbesondere des Arbeits-Hydraulikzylinders nicht mehr durch den Untergurt hindurch geführt werden. Es sind damit keine Aussparungen im Untergurt nötig, da die Laschen direkt mit dem unterhalb des Untergurtes angebrachten Querrohr mit ausreichender Schweißnahtlänge verbunden werden können.

Vorteilhafterweise ist bei dem erfindungsgemäßen Arbeitsgerät das bewegliche Element an einer Schweißkonstruktion angelenkt, welche zwei Seitenwangen und eine die Seitenwangen verbindende Bodenplatte umfaßt. Die Bodenplatte dient dabei vorteilhafterweise als Drehkranzauflage eines gegenüber einem Unterwagen um eine vertikale Drehachse drehbaren Oberwagens. Das bewegliche Element ist dabei vorteilhafterweise an den Seitenwangen der Schweißkonstruktion um eine horizontale Schwenkachse schwenkbar angelenkt. Weiterhin vorteilhafterweise sind die Arbeits-Hydraulikzylinder ebenfalls an den Seitenwangen der Schweißkonstruktion angelenkt.

Weiterhin vorteilhafterweise sind der oder die Energierückgewinnungs-Hydraulikzylinder und/oder der oder die Arbeits-Hydraulikzylinder an Laschen anlenkt, welche mit der Bodenplatte und über ein Querblech mit den Seitenwangen verbunden sind. Da die Lagerung insbesondere des Arbeits-Hydraulikzylinders an der Schweißkonstruktion lediglich auf Druck beansprucht wird, ermöglicht die Anbringung der Laschen an der Bodenplatte über der Drehkranzauflage sowie die Verbindung der Laschen mit einem die Seitenwangen verbindenden Querblech eine ebenso stabile wie kostengünstige Anbringung der Lagerstelle.

Vorteilhafterweise sind dabei die Laschen am Querblech angeschweißt. Alternativ sind die Laschen durch Aussparungen im Querblech geführt und rückseitig mit einem weiteren, vorteilhafterweise senkrecht zur Bodenplatte und zu den Seitenwangen geführten Blech verschweißt. Die Laschen sind dabei durch die Aussparungen im Querblech bis in den Bereich der Drehkranzmitte geführt. Die Anbindung an ein weiteres Querblech reduziert dabei das Biegemoment, welche auf die Bodenplatte im Bereich der Drehkranzauflage wirkt. Hierdurch ist eine stabilere Anbindung möglich. Die Laschen sind dabei über ihre gesamte Länge mit der Bodenplatte verschweißt.

Vorteilhafterweise sind dabei bei der vorliegenden Erfindung zwei Arbeits-Hydraulikzylinder vorgesehen, welche an den Seitenwangen angelenkt sind, während der oder die Energierückgewinnungs-Hydraulikzylinder zwischen den Seitenwangen angeordnet sind.

Die vorliegende Erfindung umfaßt weiterhin einen Energierückgewinnungs-Hydraulikzylinder für ein Arbeitsgerät, wie es oben beschrieben wurde. Offensichtlich weißt ein solcher Energierückgewinnungs-Hydraulikzylinder die gleichen Vorteile auf, wie sie oben bezüglich des Arbeitsgerätes beschrieben wurden. Insbesondere weist der erfindungsgemäße Energierückgewinnungs-Hydraulikzylinder dabei eine hohle Kolbenstange auf, welche zur Bodenseite hin offen ist. Hierdurch kann der Energierückgewinnungs-Hydraulikzylinder bodenseitig mit Gas befüllt werden und zur Energierückgewinnung dienen. Weiterhin vorteilhafterweise sind bei dem erfindungsgemäßen Energierückgewinnungs-Hydraulikzylinder ein Befüllventil für Gas sowie ein Überdruckventil vorgesehen. Weiterhin vorteilhafterweise ist der erfindungsgemäße Energierückgewinnungs-Hydraulikzylinder dabei so ausgeführt, wie dies oben bezüglich des Arbeitsgerätes bereits dargestellt wurde.

Der erfindungsgemäße Energierückgewinnungs-Hydraulikzylinder läßt sich dabei relativ einfach und kostengünstig in Arbeitsgeräte integrieren, da die sonst zur Energierückgewinnung benötigten Hydraulikspeicher wegfallen.

Die vorliegende Erfindung wird nun anhand von Ausführungsbeispielen sowie Zeichnungen näher beschrieben.

Dabei zeigen
- Fig. 1: ein Ausführungsbeispiel des erfindungsgemäßen Arbeitsgerätes mit zwei Arbeits-Hydraulikzylindern und einem Energierückgewinnungs-Hydraulikzylinder,
- Fig. 2 a: eine Prinzipdarstellung eines ersten Energierückgewinnungs-Hydraulikzylinders welcher nicht unter den Wortlaut der Ansprüche fällt,

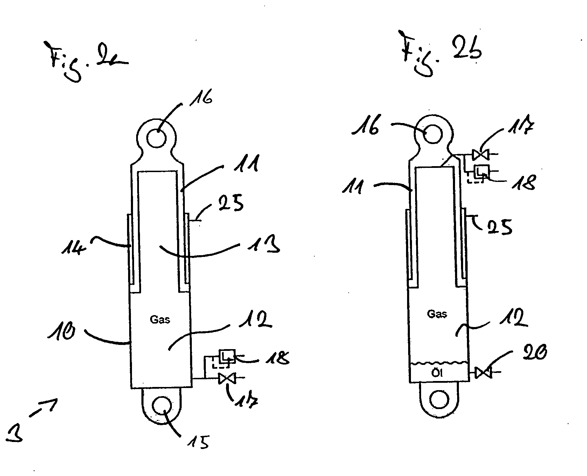

- Fig. 2 b: eine Prinzipdarstellung eines zweiten Energierückgewinnungs-Hydraulikzylinders welcher nicht unter den Wortlaut der Ansprüche fällt,

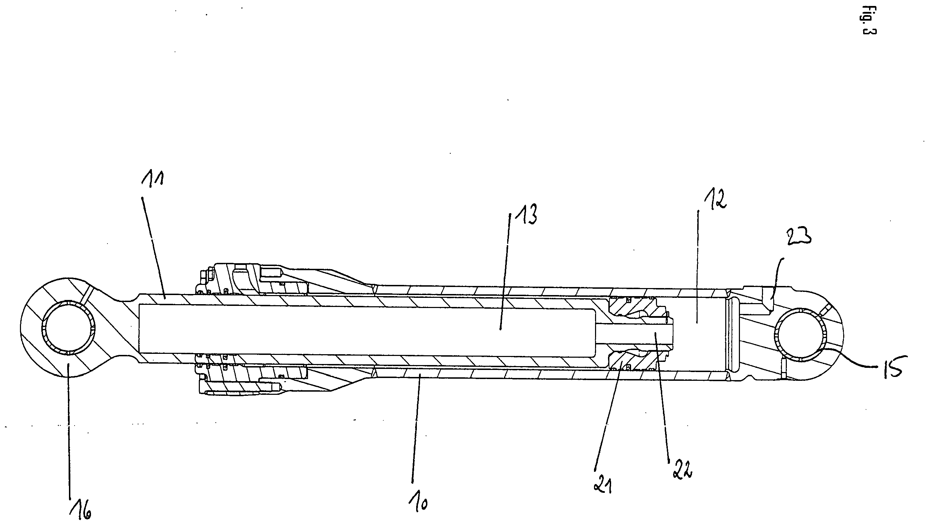

- Fig. 3: eine Schnittansicht durch ein dritten Energierückgewinnungs-Hydraulikzylinders welcher nicht unter den Wortlaut der Ansprüche fällt,

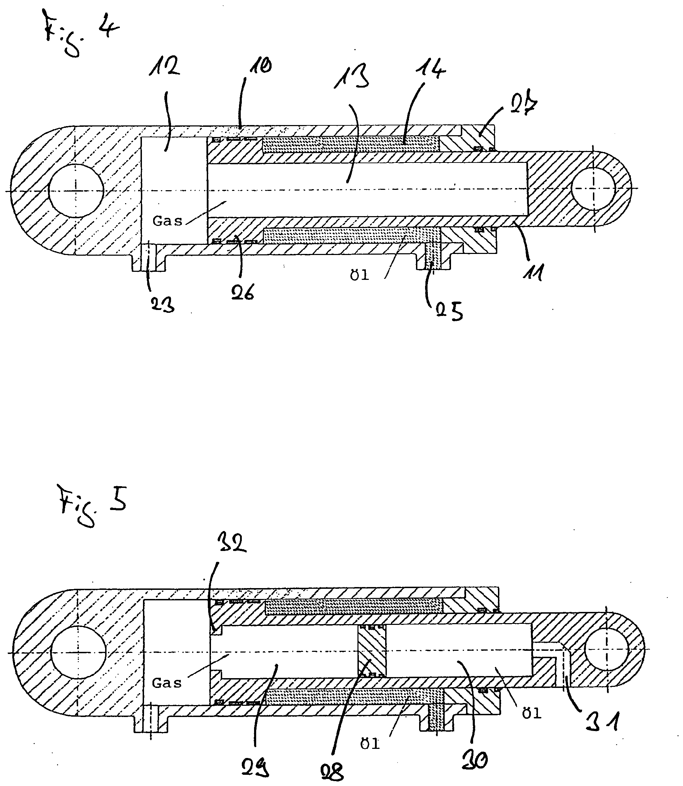

- Fig. 4: eine Schnittansicht durch ein vierten Energierückgewinnungs-Hydraulikzylinders welcher nicht unter den Wortlaut der Ansprüche fällt,
- Fig. 5: eine Schnittansicht durch ein Ausführungsbeispiel eines erfindungsgemäßen Energierückgewinnungs-Hydraulikzylinders,

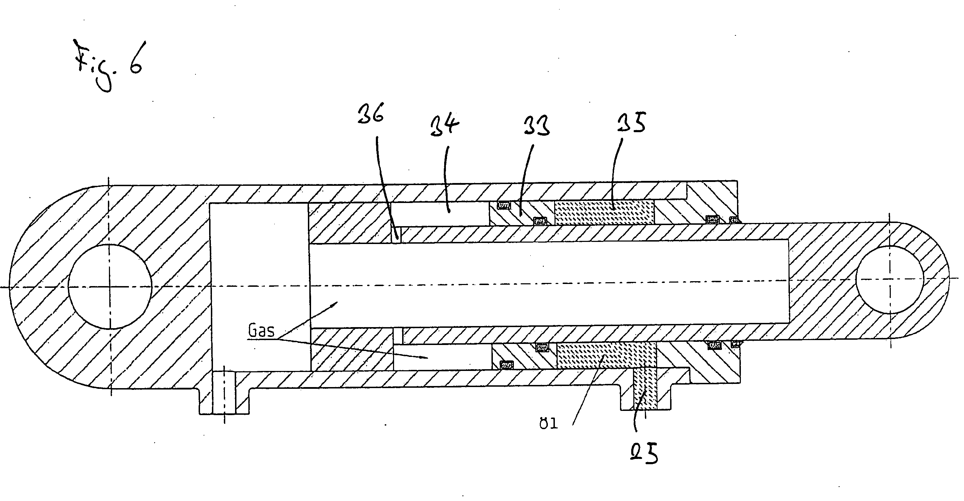

- Fig. 6: eine Schnittansicht durch ein Ausführungsbeispiel eines erfindungsgemäßen Energierückgewinnungs-Hydraulikzylinders,

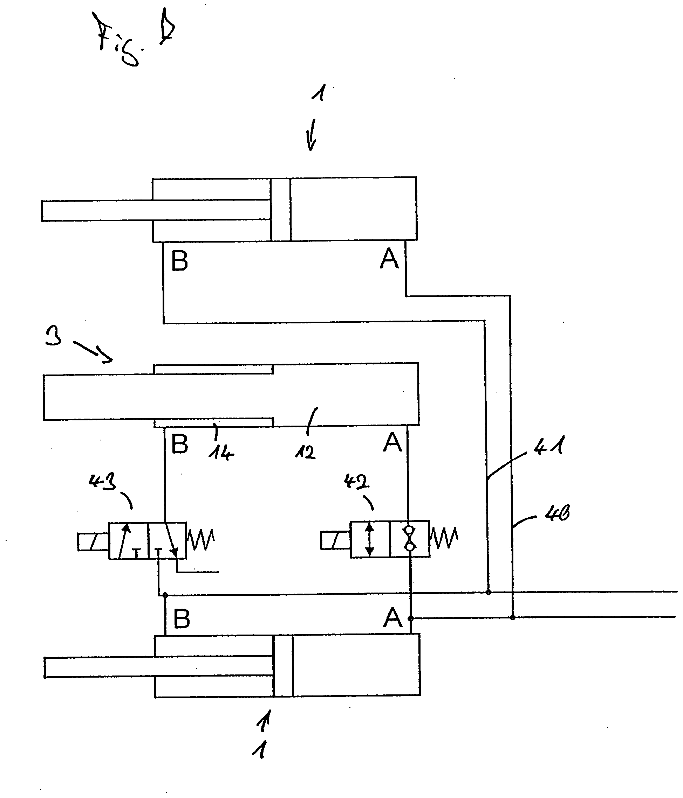

- Fig.7: eine Prinzipdarstellung eines Hydrauliksystems eines erfindungsgemäßen Arbeitsgerätes,

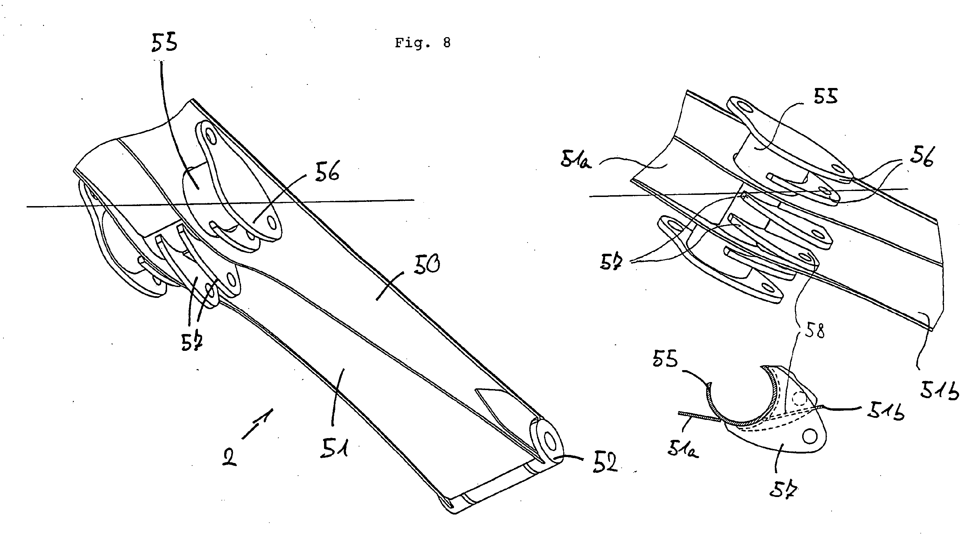

- Fig.8: ein erstes Ausführungsbeispiel einer erfindungsgemäßen Anlenkung der Arbeits-Hydraulikzylinder und Energierückgewinnungs-Hydraulikzylinder am bewegbaren Element,

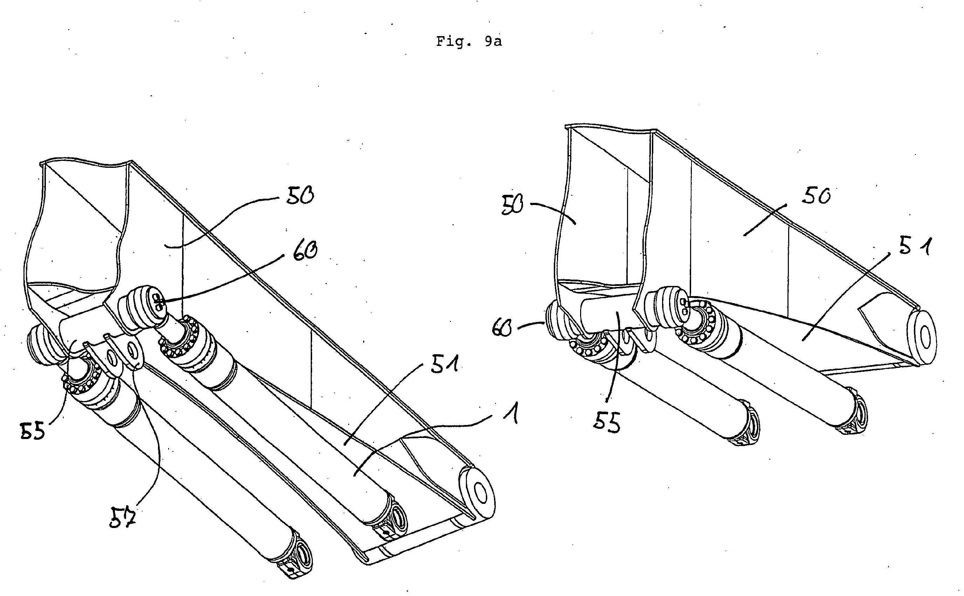

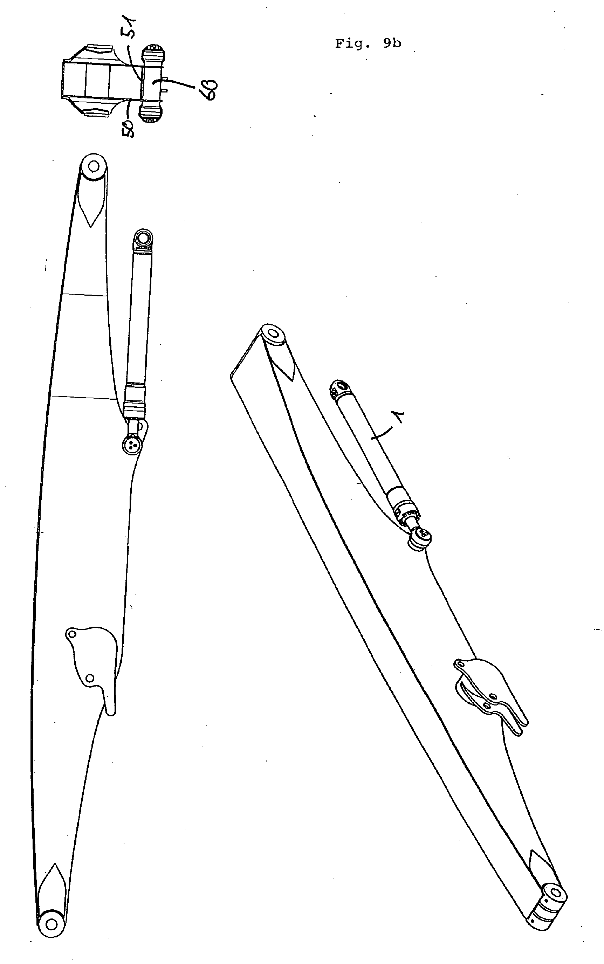

- Fig. 9 a und 9 b: ein zweites Ausführungsbeispiel einer erfindungsgemäßen Anlenkung der Arbeits- und Energierückgewinnungs-Hydraulikzylinder am bewegbaren Element.

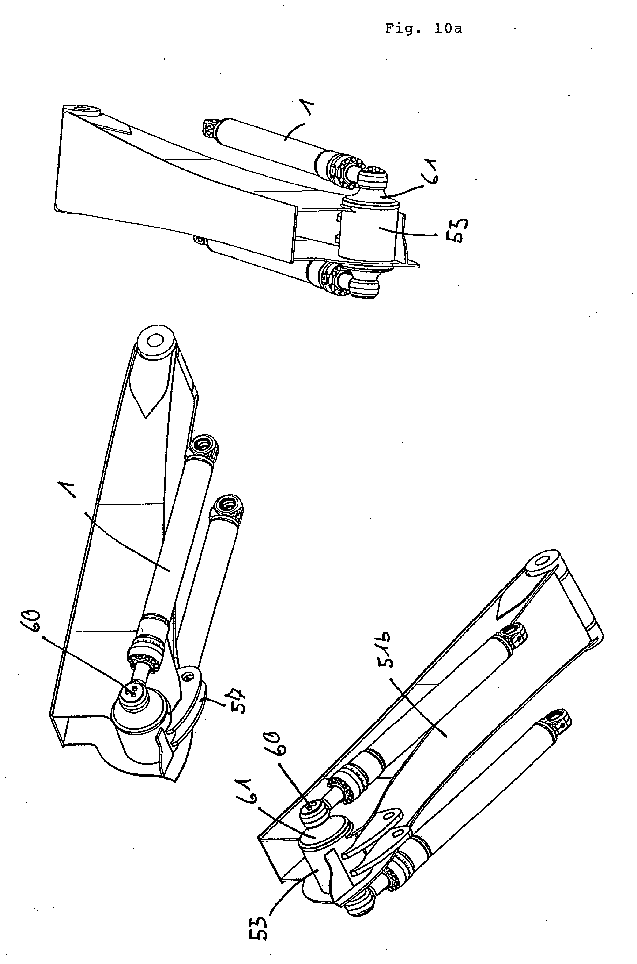

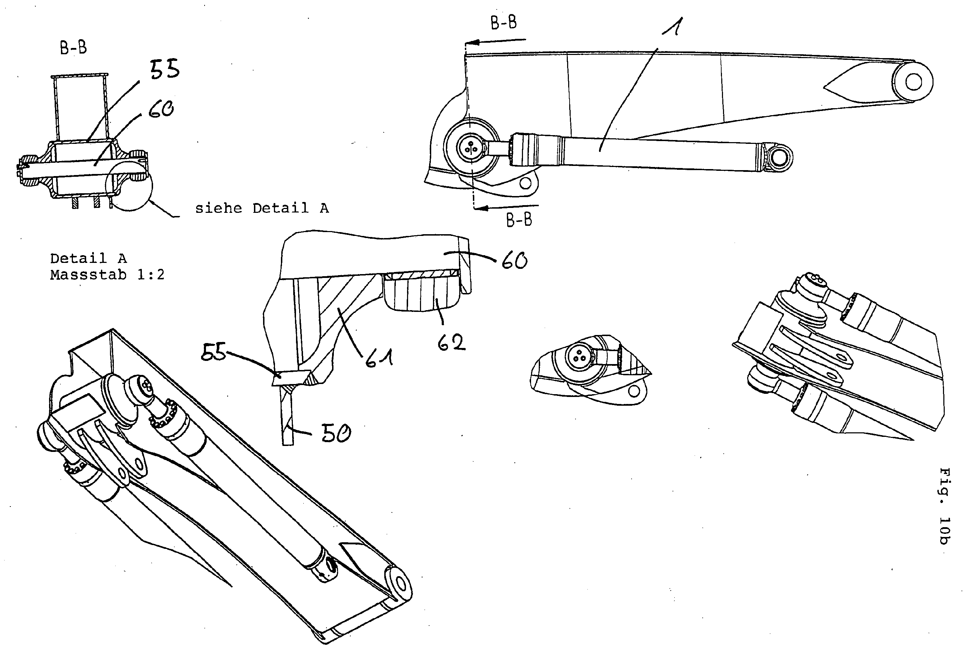

- Fig. 10 a und 10 b: ein drittes Ausführungsbeispiel einer Anlenkung der Arbeits- und Energierückgewinnungs-Hydraulikzylinder am bewegbaren Element,

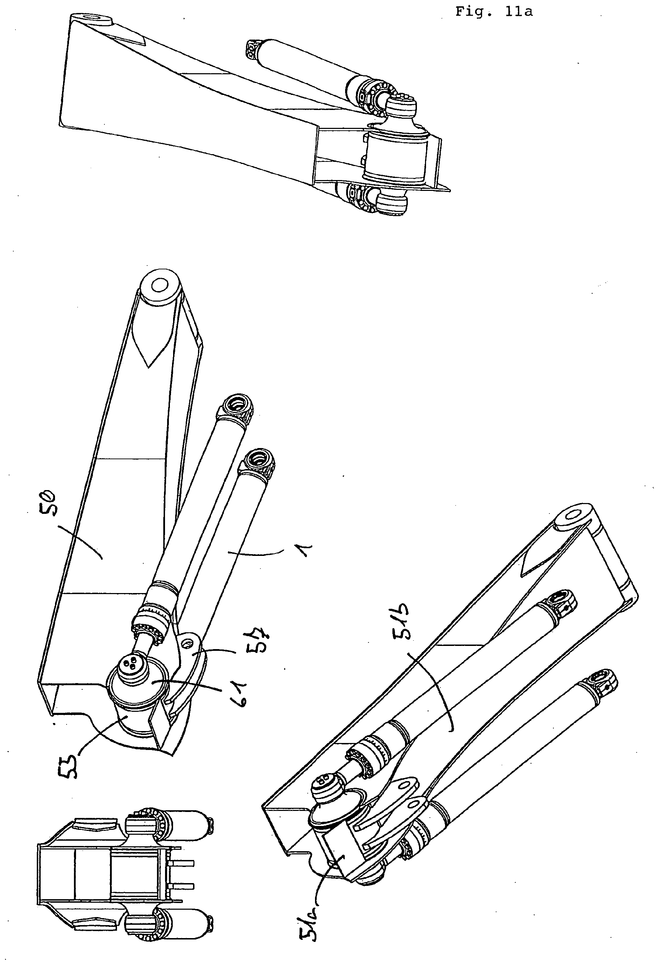

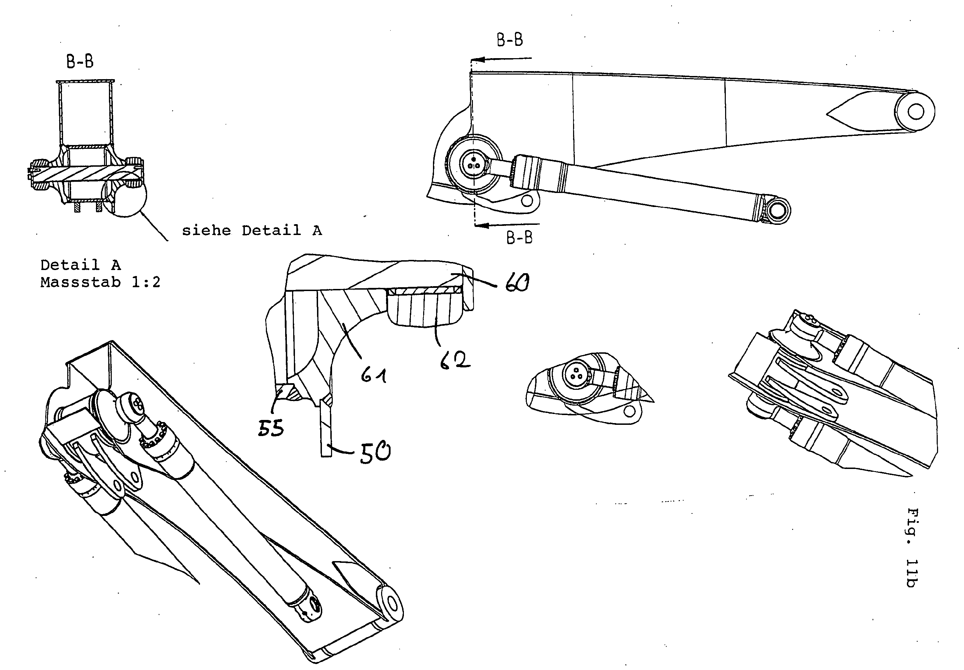

- Fig. 11 a und 11 b: ein viertes Ausführungsbeispiel einer Anlenkung der Arbeits- und Energierückgewinnungs-Hydraulikzylinder am bewegbaren Element,

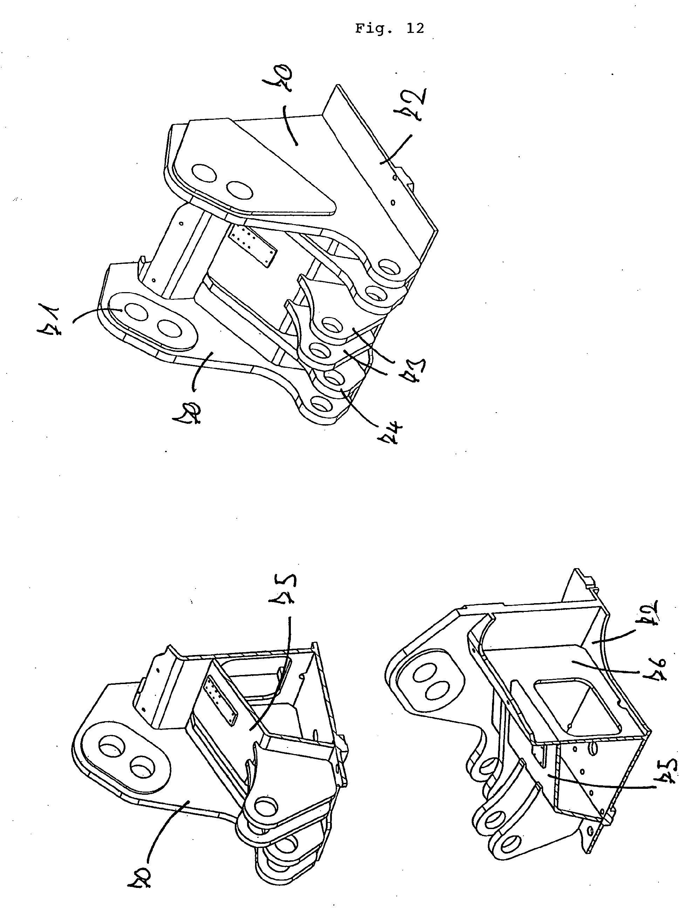

- Fig. 12: ein erstes Ausführungsbeispiel der Anlenkung der Arbeits- und Energie-rückgewinnungs-Hydraulikzylinder an einer Schweißkonstruktion des Ar-beitsgerätes, und

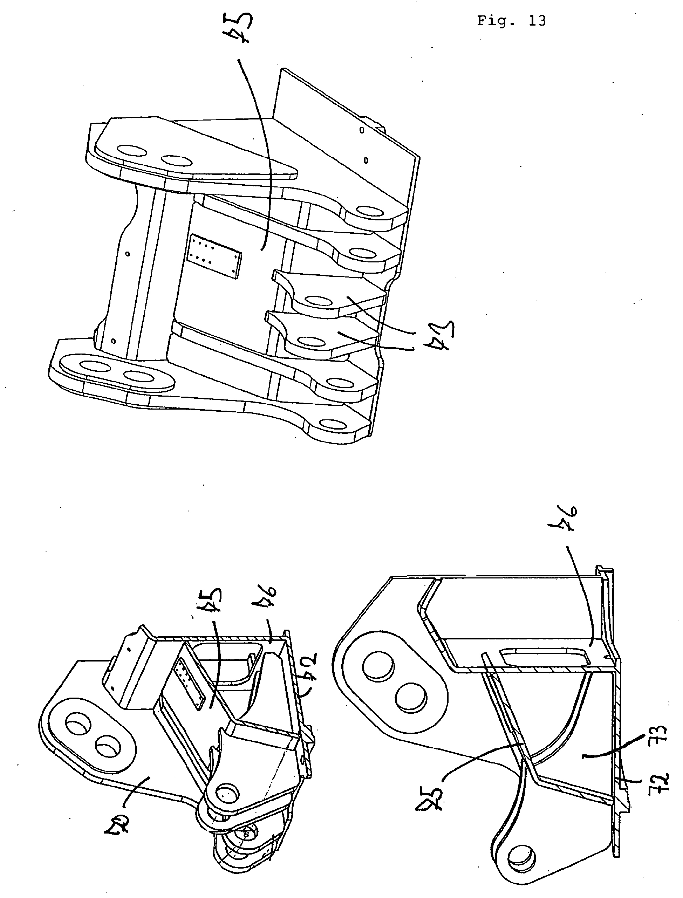

- Fig.13: ein zweites Ausführungsbeispiel der Anlenkung der Arbeits- und Ener-gierückgewinnungs-Hydraulikzylinder an einer Schweißkonstruktion des Arbeitsgerätes.

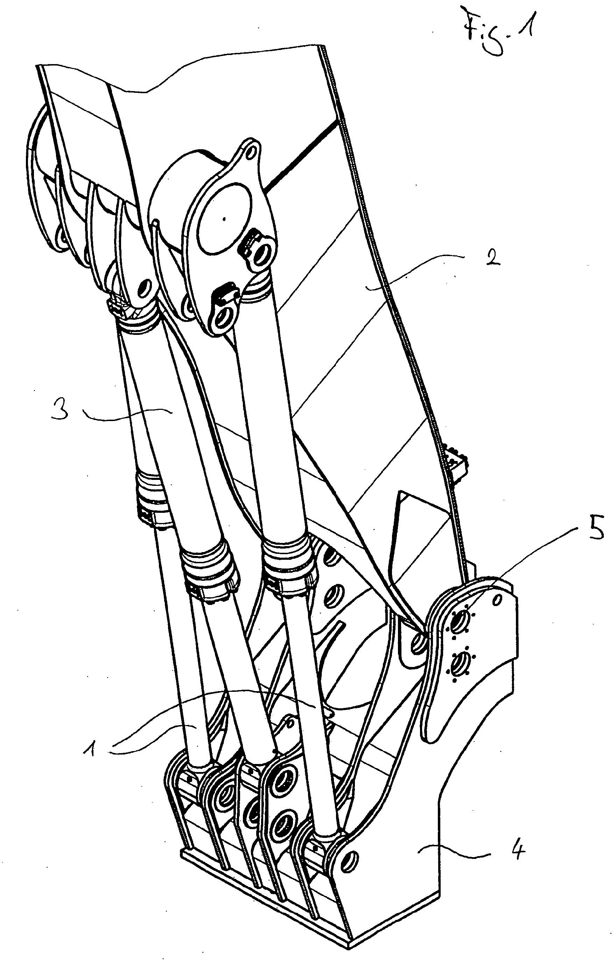

In Fig. 1 ist ein Ausführungsbeispiel des erfindungsgemäßen Arbeitsgerätes mit einem bewegbaren Element 2 gezeigt, welches über eine horizontal verlaufende Schwenkachse 5 an einer Schweißkonstruktion 4 des Arbeitsgerätes angelenkt ist. Bei dem Arbeitsgerät handelt es sich dabei um einen Hydraulikbagger, bei dem bewegbaren Element 2 um den Baggerstiel, welcher am Oberwagen des Baggers angelenkt ist. Der Oberwagen selbst ist dabei um eine vertikale Drehachse auf einem Unterwagen mit Fahrgestell drehbar angelenkt.

Zum Bewegen des bewegbaren Elementes 2 sind dabei zwei Arbeits-Hydraulikzylinder 1 vorgesehen, welche über entsprechende Anlenkpunkte am bewegbaren Element 2 sowie an der Schweißkonstruktion 4 des Oberwagens angelenkt sind. Weiterhin ist ein Ausführungsbeispiel eines erfindungsgemäßen Energierückgewinnungs-Hydraulikzylinders 3 vorgesehen, welcher wie die Arbeits-Hydraulikzylinder 1 zwischen dem bewegbaren Element 2 und dem Oberwagen des Arbeitsgerätes 4 angeordnet ist und der Energierückgewinnung aus der Bewegung des bewegbaren Elements dient. Der Energierückgewinnungs-Hydraulikzylinder 3 ist dabei zwischen den beiden Arbeits-Hydraulikzylindern 1 angeordnet. Auf die spezifische Anlenkung der Arbeits-Hydraulikzylinder und des Energierückgewinnungs-Hydraulikzylinders wird dabei noch einmal ausführlich mit Bezug auf die Figuren 8 bis 13 eingegangen.

An dem bewegbaren Element 2, in diesem Fall dem Baggerausleger, ist dabei üblicherweise eine Arbeitsausrüstung, zum Beispiel eine Baggerschaufel angeordnet. Beim Absenken des bewegbaren Elementes 2 soll nun die potentielle Energie des bewegbaren Elementes sowie der Arbeitsausrüstung rückgewonnen und gespeichert werden, um bei der Aufwärtsbewegung des bewegbaren Elements die statischen Kräfte, welche durch das Gewicht des bewegbaren Elements und der Arbeitsausrüstung sonst auf den Arbeits-Hydraulikzylindern lasten würden, zumindest teilweise zu kompensieren und so weniger Energie mittels der Arbeits-Hydraulikzylinder 1 zuführen zu müssen. Hierfür ist der erfindungsgemäße Energierückgewinnungs-Hydraulikzylinder bodenseitig mit Gas befüllt und weist eine hohle, zur Bodenseite hin offene Kolbenstange auf. Bei einem Absenken des bewegbaren Elementes wird das Gas im Energierückgewinnungs-Hydraulikzylinder komprimiert, während es sich beim Anheben des bewegbaren Elementes ausdehnt und dabei die Arbeits-Hydraulikzylinder 1 unterstützt.

In Fig. 2 a und 2 b sind nun Prinzipzeichnungen eines ersten und eines zweiten Ausführungsbeispiels eines Energierückgewinnungs-Hydraulikzylinders 3 gezeigt. Beide Ausführungsbeispiele weisen dabei einen Zylinder 10 auf, in welchem eine Kolbenstange 11 axial verschieblich gelagert ist. Die Kolbenstange 11 hat dabei die Form eines Hohlzylinders, so daß sich im Inneren der Kolbenstange 11 ein Hohlraum 13 ergibt, welcher zur Bodenseite 12 des Zylinders hin offen ist. Die Bodenseite 12 des Energierückgewinnungs-Hydraulikzylinders 3 und der Hohlraum 13 im Inneren der Kolbenstange 11 bilden dabei ein zusammenhängendes Volumen, welches mit unter Druck stehendem Gas befüllt ist. Bei einer Bewegung der Kolbenstange 11 im Zylinder 10 verändert sich dabei die Größe der Bodenseite 12, so daß das mit Gas befüllte Volumen bei voll eingeschobener Kolbenstange 11 im Wesentlichen dem Hohlraum 13 im Inneren der hohlen Kolbenstange entspricht, bei voll ausgeschobener Kolbenstange dagegen dem Volumen dieses Hohlraums 13 plus dem Volumen des Zylinders 10.

Der Energierückgewinnungs-Hydraulikzylinder weist dabei ein bodenseitiges Lagerauge 15 und ein kolbenstangenseitiges Lagerauge 16 auf, mit welchen er am Arbeitsgerät und beweglichen Element angelenkt ist. Der Energierückgewinnungs-Hydraulikzylinder ist dabei zwischen bewegbarem Element und Arbeitsgerät so angelenkt, daß die Kolbenstange 11 durch das Gewicht des bewegbaren Elementes und der Arbeitsausrüstung nach unten gegen den Boden des Energierückgewinnungs-Hydraulikzylinders bewegt wird, so daß das Gasvolumen komprimiert wird. Durch die erfindungsgemäße Ausführung des Energierückgewinnungs-Hydraulikzylinders mit einer hohlen Kolbenstange 11 ist dabei auch bei eingefahrenem Zylinder ausreichend Gasvolumen vorhanden, um einen flachen Druckanstieg beim Senken der Arbeitsausrüstung zu ermöglichen. Umgekehrt ruht bei einer Aufwärtsbewegung des bewegbaren Elementes ein Teil des Gewichts auf dem Gasvolumen im Energierückgewinnungs-Hydraulikzylinder, so daß die Arbeits-Hydraulikzylinder nicht mehr die komplette statische Last aufbringen müssen.

Der Energierückgewinnungs-Hydraulikzylinder weist ein Befüllventil 17 zum Befüllen der Bodenseite mit Gas und ein Druckbegrenzungsventil 18 zur Begrenzung des Gasdrucks auf. Im ersten Ausführungsbeispiel in Fig. 2 a sind dabei das Befüllventil 17 und das Druckbegrenzungsventil 18 bodenseitig angeordnet. In dem in Figur 2 b gezeigten zweiten Ausführungsbeispiel sind das Befüllventil 17 und das Druckbegrenzungsventil 18 dagegen kolbenstangenseitig angeordnet.

Bei dem ersten und dem zweiten Ausführungsbeispiel des Energierückgewinnungs-Hydraulikzylinders handelt es sich um einen zweiseitigen Hydraulikzylinder, so daß ein Ringraum 14 vorgesehen ist, welcher über einen Anschluß 12 an ein Hydrauliksystem des Arbeitsgerätes anschließbar ist. Auch die Bodenseite kann einen Anschluß aufweisen, über welche sie an ein Hydrauliksystem des Arbeitsgerätes anschließbar ist.

Wie in Fig. 2 b gezeigt, kann das Gasvolumen im Energierückgewinnungs-Hydraulikzylinder dabei durch Zuführen oder Abführen von Öl zum Energierückgewinnungszylinder verändert werden. Hierfür ist im zweiten Ausführungsbeispiel in Fig. 2 b ein Anschluß 20 zu Versorgung mit Öl vorgesehen, über welchen der Bodenraum des Energierückgewinnungs-Hydraulikzylinders an ein Hydrauliksystem des Arbeitsgerätes anschließbar ist. Hierdurch kann eine flachere oder steilere Druckkennlinie beim Senken bzw. Heben des bewegbaren Elementes eingestellt und damit eine Anpassung an die Einsatzbedingungen erreicht werden.

In Fig. 3 ist ein drittes Ausführungsbeispiel des Energierückgewinnungs-Hydraulikzylinders gezeigt, bei welchem die Bodenseite 12 und der Hohlraum 13 im Inneren der Kolbenstange 11 ebenfalls mit unter Druck stehendem Gas befüllt sind. Dabei ist in der Schnittansicht auch der Kolben 21 mit den entsprechenden Dichtungen gezeigt. Der Hohlraum 13 im Inneren der Kolbenstange 11 ist dabei über einen durch den Kolben 21 geführten Kanal 22 mit der Bodenseite 12 verbunden. Die Bodenseite weist weiterhin einen Anschluß 23 zum Befüllen der Bodenseite 12 mit Gas auf. Das in Fig. 3 gezeigte dritte Ausführungsbeispiel eines Energierückgewinnungs-Hydraulikzylinders ist dabei als einseitiger Hydraulikzylinder ausgeführt, so daß kein Ringraum vorgesehen ist.

In Fig. 4 a ist ein viertes Ausführungsbeispiel des Energierückgewinnungs-Hydraulikzylinders gezeigt, welches im Wesentlichen dem in Fig. 2 a gezeigten ersten Ausführungsbeispiel entspricht. Im Inneren der Kolbenstange 11 ist dabei der zylinderförmige Hohlraum 13 vorgesehen, welcher sich im Wesentlichen entlang der gesamten Kolbenstangenlänge erstreckt und ebenso wie die Bodenseite 12, zu welcher hin er offen ist, mit Gas befüllt ist. Bodenseitig ist dabei ein Anschluß 23 vorgesehen. Das vierte Ausführungsbeispiel des Energierückgewinnungs-Hydraulikzylinders ist wiederum zweiseitig aufgebaut und weist daher einen Ringraum 14 auf, welcher von dem Zylinder 10 und der Außenseite der Kolbenstange 11 gebildet wird. Die Kolbenstange 11 ist dabei in der Führung 27 geführt, welche den Ringraum 14 kolbenstangenseitig begrenzt. Der Ringraum 14 weist dabei einen Anschluß 25 zum Anschluß an ein Hydrauliksystem des Arbeitsgerätes auf. Dabei ist der Ringraum 14 mit Öl befüllt.

In Fig. 5 ist ein Ausführungsbeispiel des erfindungsgemäßen Energierückgewinnungs-Hydraulikzylinders gezeigt, welches neben dem bereits mit Bezug auf Fig. 4 beschriebenen Aufbau zusätzlich einen Trennkolben 28 aufweist, welcher in der hohlen Kolbenstange in Längsrichtung bewegbar ist. Der Trennkolben 28 teilt damit den Hohlraum 13 im Inneren der Kolbenstange 11 in einen bodenseitigen Bereich 29, welcher mit der Bodenseite 12 in Verbindung steht und mit Gas befüllt ist, und in einen stangenseitigen Bereich 30, welcher mit Öl befüllt ist. Dabei ist ein Anschluß 31 für den mit Öl gefüllten Raum 30 vorgesehen. Durch Einstellen der Ölmenge im mit Öl befüllten Raum 30 kann die Position des Trennkolbens 28 und damit die Größe des ersten Bereichs 29 eingestellt werden. Hierdurch ist es möglich, daß Gasvolumen im Energierückgewinnungs-Hydraulikzylinder durch Einstellung der Ölmenge in dem mit Öl befüllten Raum 30 einzustellen. Hierdurch läßt sich wiederum die Kennlinie des Energierückgewinnungs-Hydraulikzylinders flexibel einstellen. Dabei ist ein Anschlag 32 vorgesehen, welcher eine Bewegung des Trennkolbens aus der Kolbenstange heraus verhindert.

In einer besonders vorteilhaften Ausführung des erfindungsgemäßen Arbeitsgerätes wird das in Fig. 5 gezeigte Ausführungsbeispiel des Energierückgewinnungs-Hydraulikzylinders mit einem zweiten Energierückgewinnungszylinder, insbesondere ein Energierückgewinnungszylinder gemäß dem in Fig. 4 gezeigten Ausführungsbeispiel, kombiniert. Dabei ist der mit Öl gefüllte Raum 30, über welchen die Position des Trennkolbens 28 einstellbar ist, über den Anschluß 31 mit dem Ringraum 14 des zweiten Energierückgewinnungszylinders verbunden. Bei einem Anheben des beweglichen Elementes wird dabei das Öl aus dem Ringraum 14 in den mit Öl befüllten Raum 30 gedrückt, so daß der Trennkolben 28 zur Bodenseite hin verschoben wird und sich das Gasvolumen vermindert. Hierdurch ist eine effektivere Energierückgewinnung möglich. Bei einem Absenken des bewegbaren Elements wird umgekehrt der Trennkolben 28 von der Bodenseite weg bewegt, so daß das Gasvolumen vergrößert wird. Durch diese Anordnung wird der maximal im Zylinder vorhandene Gasdruck niedrig gehalten, ohne hierdurch die Energierückgewinnung zu verschlechtern.

In Fig. 6 ist ein weiteres Ausführungsbeispiel eines erfindungsgemäßen Energierückgewinnungs-Hydraulikzylinders gezeigt. Dieses basiert ebenfalls im Wesentlichen auf dem in Fig. 4 gezeigten Ausführungsbeispiel, wobei zusätzlich ein Trennkolben 33 im Ringraum 14 vorgesehen ist. Der Trennkolben 33 teilt dabei den Ringraum 14 in einen ersten, mit Gas gefüllten Teil 34 und einen zweiten, mit Öl gefüllten Teil 35. Der erste, mit Gas gefüllte Teil des Ringraumes steht dabei über Überströmungsöffnungen 36 mit der mit Gas gefüllten Bodenseite in Verbindung. Im Ausführungsbeispiel verlaufen die Überströmungsöffnungen dabei zwischen dem Ringraum und dem Hohlraum in der Kolbenstange 11. Auch bei diesem Ausführungsbeispiel läßt sich über das Ölvolumen im mit Öl gefüllten Teil 35 des Ringraumes die Position des Trennkolbens 33 und damit das Gasvolumen im Energierückgewinnungs-Hydraulikzylinder einstellen.

Das Einstellen des Gasvolumens im Energierückgewinnungs-Hydraulikzylinder erfolgt dabei erfindungsgemäß über eine entsprechende Steuerungsvorrichtung, welche z.B. wie bereits beschrieben rein mechanisch durch ein oder mehrere weitere Hydraulikzylinder erfolgen kann. Alternativ ist auch eine Ansteuerung über Ventile, welche per Hand oder über eine Steuereinrichtung angesteuert werden, denkbar.

In Fig. 7 ist ein Hydraulikschaltbild der beiden Arbeits-Hydraulikzylinder 1 und des Energierückgewinnungs-Hydraulikzylinders 3 gezeigt. Die Bodenseiten A der Arbeitszylinder 1 werden dabei über eine Druckleitung 40 mit Druck beaufschlagt, die Ringseiten B der Arbeitszylinder 1 über eine Druckleitung 41. Erfindungsgemäß sind nun Schaltventile 42 und 43 vorgesehen, über welche der bodenseitige Anschluß A des Energierückgewinnungs-Hydraulikzylinders 3 mit der Leitung 40, und der ringseitige Anschluß B des Energierückgewinnungs-Hydraulikzylinders 3 mit der Leitung 41 verbindbar ist. In der in Fig. 7 gezeigten Sperrstellung ist die Bodenseite 12 geschlossen und dient der Energiespeicherung über das darin befindliche komprimierte Gas. Die Ringseite 14 ist mit der Rücklaufleitung des Hydrauliksystems verbunden und liegt damit auf Minimaldruck. Bei einem Verlust des Gasdruckes im Bodenraum 12 des Energierückgewinnungs-Hydraulikzylinders 3 kann dieser jedoch durch Umschalten der Schaltventile 42 und 43 mit den Arbeitszylindem 1 parallel geschaltet werden. Der Energierückgewinnungs-Hydraulikzylinders 3 kann dann zur Unterstützung der Arbeits-Hydraulikzylinder mit Öl beaufschlagt werden.

Im Weiteren wird nun anhand der Figuren 8 bis 12 die Anlenkung der beiden Arbeitszylinder 1 und des Energierückgewinnungs-Hydraulikzylinders 3 am bewegbaren Element 2 und am Arbeitsgerät näher dargestellt. Das bewegbare Element 2 weist dabei in allen Ausführungsbeispielen eine Kastenkonstruktion mit zwei Seitenwangen 50, einem Untergurt 51 und gegebenenfalls einem Obergurt auf. Die Kastenkonstruktion steht dabei mit dem Lager 52 in Verbindung, über welches das bewegbare Element 2 um eine horizontale Achse verschwenkbar am Arbeitsgerät angelenkt ist. Die Seitenwangen verlaufen damit im Wesentlichen in vertikaler Richtung.

In Fig. 8 ist nun ein erstes Ausführungsbeispiel der Anlenkung der Arbeitszylinder sowie des Energierückgewinnungs-Hydraulikzylinders am bewegbaren Element 2 gezeigt. Dabei ist ein Rohr 55 vorgesehen, welches die Seitenwangen 50 der Kastenkonstruktion verbindet. Zwischen den beiden Seitenwangen 50 sind dabei Laschen 57 mit dem Rohr 55 verbunden, an welchen der Energierückgewinnungs-Hydraulikzylinder angelenkt ist. Das Rohr 55 ist durch Aussparungen in den Seitenwangen 50 geführt, wobei außerhalb der Seitenwangen am Rohr Laschen 56 zur Anlenkung der Arbeits-Hydraulikzylinder vorgesehen sind. Durch die Anlenkung des Energierückgewinnungs-Hydraulikzylinders am Rohr 55 zwischen den Anlenkungsbereichen der Arbeits-Hydraulikzylinder kann das Rohr dabei weniger massiv ausgeführt werden, da es durch die Unterstützung des bewegbaren Elementes über den Energierückgewinnungs-Hydraulikzylinder weniger auf Biegung beansprucht wird. Der Untergurt 51 der Kastenkonstruktion ist dabei mehrteilig ausgeführt, wobei ein erstes Untergurtblech 51 a und ein zweites Untergurtblech 51 b auf das Rohr 55 gestoßen und mit diesem verschweißt sind. Im Untergurtblech 51 b sind dabei Aussparungen 58 im Bereich des Rohres 55 vorgesehen, durch welche die Laschen 57 zur Lagerung des Energierückgewinnungs-Hydraulikzylinders hindurch geführt und mit welchen diese verschweißt sind. Dies ermöglicht eine bessere Anbindung der Laschen 57.

In Fig. 9 a und 9 b ist ein zweites Ausführungsbeispiel der Anlenkung gezeigt, bei welchem das Rohr 55 unterhalb des Untergurtes verläuft. Die Seitenwangen 50 sind hierfür im Bereich des Rohres 55 nach unten unter den Untergurt gezogen. Die Lagerung des Energierückgewinnungs-Hydraulikzylinders erfolgt dabei wiederum an Laschen 57, welche am Rohr 55 angeschweißt sind. Die Lagerung der Arbeitszylinder erfolgt dagegen mittels eines Bolzens 60, welcher in dem Rohr 55 geführt ist.

In Fig. 10 a und 10 b ist ein drittes Ausführungsbeispiel der erfindungsgemäßen Anlenkung gezeigt, bei welchem Gußteile 61 vorgesehen sind, in welchen der Bolzen 60 zur Lagerung der Arbeitszylinder gelagert ist. Wie im Schnitt B-B in Fig. 10 b deutlich zu erkennen, verläuft der Bolzen 60 dabei im Inneren des Rohres 55, welches einen größeren Durchmesser als der Bolzen aufweist, durch die gesamte Kastenkonstruktion. Das Rohr 55 ist dabei durch Aussparungen in den Seitenwangen geführt und dort mit diesen verschweißt. Wie insbesondere im Detail A in Fig. 10 b zu erkennen, sind die Gußteile 61 mit dem Rohr 55 verschweißt. Der Bolzen 60 ist in den Gußteilen 61 gelagert und trägt die Lageraugen 62 der Arbeitszylinder.

Auch bei dem in Fig. 11 a und 11 b gezeigten vierten Ausführungsbeispiel der Anlenkung kommen Gußteile 61 zur Lagerung des Bolzens 60 zu Einsatz. Wie in Detail A in Fig. 11 b zu erkennen, sind hierbei jedoch die Gußteile 61 durch Aussparungen in den Seitenwangen 50 geführt und dort mit diesen verschweißt. Das Rohr 55 ist ebenfalls mit den Gußteilen 61 verschweißt.

Die Anordnung der Laschen 57 zur Lagerung des Energierückgewinnungs-Hydraulikzylinders erfolgt dabei im dritten und vierten Ausführungsbeispiel wie im ersten Ausführungsbeispiel. Dabei stoßen zwei Bleche des Untergurtes gegen das Rohr 55, und die Laschen sind am Rohr 55 zwischen den beiden Seitenwangen 50 angeschweißt und durch Aussparungen in einem der Untergurtbleche hindurch geführt.

In den Fig. 12 und 13 wird nun die Anlenkung der Arbeits-Hydraulikzylinder und des Energierückgewinnungs-Hydraulikzylinders am Oberwagen des Arbeitsgerätes näher dargestellt. Dabei ist eine Schweißkonstruktion aus zwei Seitenwangen 70 und einer Bodenplatte 72 vorgesehen, wobei das bewegliche Element über Lagerstellen 71 an den Seitenwangen 70 gelagert ist. Dies ist auch in Fig. 1 entsprechend zu erkennen. Die Bodenplatte 72 der Schweißkonstruktion dient dabei als Drehkranzauflage des Oberwagens. Die Arbeits-Hydraulikzylinder sind an den Seitenwangen 70 sowie an Laschen 74 gelagert, welche innerhalb der Seitenwangen 71 angeordnet sind. Zur Lagerung des Energierückgewinnungs-Hydraulikzylinders sind zwischen den Arbeitszylinderlagern 74 Laschen 73 vorgesehen. Diese sind mit dem . Bodenblech 72 sowie mit mindestens einem quer zu den Laschen angeordneten Blech 75 verbunden, welches die Seitenwangen 70 und die Bodenplatte 72 miteinander verbindet. Das Querblech 75 ist dabei mit einer Vorderkante mit der Bodenplatte 72 und mit seinen Seitenkanten mit den Seitenwangen 70 verschweißt.

In Fig. 12 ist dabei eine erste Ausführungsvariante gezeigt, bei welcher die Laschen 73 zur Lagerung des Energierückgewinnungs-Hydraulikzylinders auf das Querblech 75 aufgesetzt und mit diesem sowie mit der Bodenplatte 72 verschweißt sind.

In Fig. 13 ist eine zweite Ausführungsvariante gezeigt, bei welcher das Querblech 75 Aussparungen aufweist, durch welche die Laschen 73 hindurch gehen. Die Laschen 73 sind damit auch mit ihrem hinteren Teil mit der Bodenplatte 72 verschweißt und verlaufen entlang der Bodenplatte bis zu einer weiteren Querplatte 76, mit welcher sie ebenfalls verschweißt sind. Die weitere Querplatte 76 verläuft dabei im Wesentlichen senkrecht zur Bodenplatte und verbindet ebenfalls die Seitenwangen 70 miteinander. Die Laschen 73 verlaufen durch die Aussparung im Querblech 75 bis in den Bereich der Drehkranzmitte. Die Anbindung an das weitere Querblech 76 reduziert dabei das Biegemoment, welches durch die Lagerung auf die Bodenplatte 72 im Bereich der Drehkranzauflage wirkt. Hierdurch ergibt sich eine stabile Anbindung.

Durch das erfindungsgemäße Arbeitsgerät mit dem erfindungsgemäßen Energierückgewinnungs-Hydraulikzylinder stellt die vorliegende Erfindung eine ebenso effektive wie kostengünstig umzusetzende Möglichkeit der Energierückgewinnung über das im Bodenbereich und in der hohlen Kolbenstange des Energierückgewinnungs-Hydraulikzylinders komprimierte Gas zur Verfügung. Weiterhin zeigt die vorliegende Erfindung äußerst stabile Möglichkeiten der Lagerung der Arbeitszylinder und des Energierückgewinnungs-Hydraulikzylinders, für welche unabhängig von der Ausführung des Energierückgewinnungs-Hydraulikzylinders Schutz beansprucht wird.

## Patentansprüche

1. Arbeitsgerät, insbesondere Bagger oder Maschine zum Materialum-schlag, mit einem über mindestens einen Arbeits-Hydraulikzylinder (1) bewegbaren Element (2), wobei mindestens ein Energierückgewinnungs-Hydraulikzylinder (3) zur Energierückgewinnung aus der Bewegung des bewegbaren Elements (2) vorgesehen ist,
wobei der Energierückgewinnungs-Hydraulikzylinder (3) bodenseitig mit Gas befüllt ist und eine hohle, zur Bodenseite (12) hin offene Kolbenstange (11) aufweist,
**dadurch gekennzeichnet,**
**dass** in der hohlen Kolbenstange des Energierückgewinnungs-Hydraulikzylinders ein längs der Kolbenstange beweglicher Trennkolben (28) vorgesehen ist, welcher einen in der hohlen Kolbenstange vorgesehenen mit Öl gefüllten Raum (30) von der mit Gas befüllten Bodenseite (29) des Energierückgewinnungs-Hydraulikzylinders trennt und der mit Öl gefüllte Raum (30) einen Anschluss (31) zur Versorgung mit Öl aufweist, so dass die Position des Trennkolbens (28) längs der Kolbenstange über die Befüllmenge des mit Öl gefüllten Raumes (30) einstellbar ist.

2. Arbeitsgerät, insbesondere Bagger oder Maschine zum Materialum-schlag, mit einem über mindestens einen Arbeits-Hydraulikzylinder (1) bewegbaren Element (2), wobei mindestens ein Energierückgewinnungs-Hydraulikzylinder (3) zur Energierückgewinnung aus der Bewegung des bewegbaren Elements (2) vorgesehen ist,
wobei der Energierückgewinnungs-Hydraulikzylinder (3) bodenseitig mit Gas befüllt ist und eine hohle, zur Bodenseite (12) hin offene Kolbenstange (11) aufweist,
**dadurch gekennzeichnet,**
**dass** im Ringraum (14) des Energierückgewinnungs-Hydraulikzylinders ein längs der Kolbenstange beweglicher Trennkolben (33) vorgesehen ist, welcher einen mit Gas gefüllten Teil (34) des Ringraumes (14) von einem mit Öl gefüllten Teil (35) des Ringraumes (14) trennt, wobei der mit Gas gefüllte Teil (34) des Ringraumes (14) mit der Bodenseite des Energierückgewinnungs-Hydraulikzylinders über Überströmungsöffnungen (36) verbunden ist und die Position des Trennkolbens (33) längs der Kolbenstange über die Befüllmenge des mit Öl gefüllten Teil (35) des Ringraumes (14) einstellbar ist.

3. Arbeitsgerät nach Anspruch 1 oder 2, wobei der Energierückgewinnungs-Hydraulikzylinder (3) ringseitig einen Anschluss (25) zur Versorgung mit Öl aufweist, über welchen der Ringraum (14) des Energierückgewinnungs-Hydraulikzylinders (3) an ein Hydrauliksystem des Arbeitsgerätes anschließbar und/oder angeschlossen ist.

4. Arbeitsgerät nach Anspruch 1, 2 oder 3, wobei der Energierückgewinnungs-Hydraulikzylinder (3) ein Befüllventil (17) zum Befüllen mit Gas und/oder ein Druckbegrenzungsventil (18) aufweist, welche vorteilhafterweise bodenseitig angeordnet sind.

5. Arbeitsgerät nach Anspruch 1, wobei der Anschluss (31) zur Versorgung des mit Öl gefüllten Raumes (30) mit Öl im Bereich des Lagerauges (16) der Kolbenstange (11) vorgesehen ist.

6. Arbeitsgerät nach einem der vorangegangenen Ansprüchen, wobei zwei oder mehr Energierückgewinnungs-Hydraulikzylinder (3) vorgesehen sind, welche öl-hydraulisch miteinander in Wirkverbindung stehen, wobei vorteilhafterweise ein Energierückgewinnungs-Hydraulikzylinder (3) gemäß Anspruch 1 vorgesehen ist, dessen mit Öl gefüllter Raum (30) mit der Ringseite eines weiteren Energierückgewinnungs-Hydraulikzylinders (3) verbunden ist.

7. Arbeitsgerät nach einem der vorangegangenen Ansprüchen, wobei der Energierückgewinnungs-Hydraulikzylinders (3) bodenseitig einen Anschluss zur Versorgung mit Öl aufweist, über welchen der Bodenraum (12) des Energierückgewinnungs-Hydraulikzylinders (3) an ein Hydrauliksystem des Arbeitsgerätes anschließbar ist und wobei wahlweise der Energierückgewinnungs-Hydraulikzylinder (3) über Ventile (42, 43) mit der Arbeits-Hydrauliksteuerung des Arbeitsgerätes verbindbar und zur Unterstützung des Arbeits-Hydraulikzylinders (1) mit Öl beaufschlagbar ist.

8. Arbeitsgerät nach einem der vorangegangenen Ansprüchen, wobei das bewegbare Element (2) eine Kastenkonstruktion mit zwei Seitenwangen (50) umfaßt, wobei der oder die Energierückgewinnungs-Hydraulikzylinder (3) und/oder der oder die Arbeits-Hydraulikzylinder (1) über ein die Seitenwangen (50) verbindendes Rohr (55) am beweglichen Element (2) angelenkt sind und wobei gemäß einer Ausführung das Rohr (55) durch Aussparungen in den Seitenwangen (50) geführt ist und außerhalb der Seitenwangen (50) am Rohr (55) Laschen (56) angeordnet sind, an welchen die Arbeits-Hydraulikzylinder (1) oder die Energierückgewinnungs-Hydraulikzylinder (3) angelenkt sind, während gemäß einer anderen Ausführung das Rohr (55) durch Aussparungen in den Seitenwangen (50) geführt ist und die Arbeits-Hydraulikzylinder (1) oder die Energierückgewinnungs-Hydraulikzylinder (3) mittels eines in dem Rohr (55) geführten Bolzens (60) seitlich der Seitenwangen (50) angelenkt sind.

9. Arbeitsgerät nach Anspruch 8, wobei Gußteile (61) zur Lagerung eines Bolzens (60) vorgesehen sind, an welchen die Arbeits-Hydraulikzylinder (1) oder die Energierückgewinnungs-Hydraulikzylinder (3) angelenkt sind, wobei die Gußteile (61) vorteilhafterweise mit Aussparungen in den Seitenwangen und/oder einem durch Aussparungen in den Seitenwangen geführtem Rohr (55) verschweißt sind.

10. Arbeitsgerät nach einem der Ansprüche 8 oder 9, wobei die Kastenkonstruktion weiterhin einen Untergurt (51) aufweist, welcher aus mindestens zwei Blechen (51a, 51b) gefertigt ist, die mit dem Rohr (55) verschweißt sind, wobei vorteilhafterweise mindestens eines der Bleche Aussparungen (58) im Bereich des Rohres (55) aufweist, durch welche Laschen (57) zum Anlenken des oder der Arbeits-Hydraulikzylinder (1) und/oder des oder der Energierückgewinnungs-Hydraulikzylinder (3) hindurchgeführt sind, wobei die Laschen (57) vorteilhafterweise mit dem oder den Blechen verschweißt sind.

11. Arbeitsgerät nach einem der Ansprüche 8 bis 10, wobei die Kastenkonstruktion weiterhin einen Untergurt (51) umfaßt und das die Seitenwangen (50) verbindende Rohr (55) unterhalb des Untergurtes (51) verläuft, und wobei der oder die Energierückgewinnungs-Hydraulikzylinder (3) und/oder der oder die Arbeits-Hydraulikzylinder (1) zwischen den Seitenwangen (50) mittels Laschen an dem Rohr (55) angelenkt sind.

12. Arbeitsgerät nach einem der vorangegangenen Ansprüchen, wobei das bewegliche Element (2) an einer Schweißkonstruktion angelenkt ist, welche zwei Seitenwangen (70) und eine die Seitenwangen (70) verbindende Bodenplatte (72) umfaßt, wobei der oder die Energierückgewinnungs-Hydraulikzylinder (3) und/oder der oder die Arbeits-Hydraulikzylinder (1) an Laschen (73, 74) angelenkt sind, welche mit der Bodenplatte (72) und über ein Querblech (75) mit den Seitenwangen (70) verbunden sind.

13. Arbeitsgerät nach Anspruch 12, wobei die Laschen (73, 74) entweder am Querblech (75) angeschweißt sind oder durch Aussparungen im Querblech (75) geführt und rückseitig mit einem weiteren, vorteilhafterweise senkrecht zur Bodenplatte (72) und zu den Seitenwangen (70) geführten Blech (76) verschweißt sind.

## Claims

1. Piece of working equipment, in particular an excavator or a machine for the transfer of material, having an element (2) movable via at least one working hydraulic cylinder (1), wherein at least one energy recovery hydraulic cylinder (3) is provided for the recovery of energy from the movement of the movable element (2),
wherein the energy recovery hydraulic cylinder (3) is filled with gas at the bottom side and comprises a hollow piston rod (11) open toward the bottom side (12),
**characterized in that**
a separating piston (28) is provided in the hollow piston rod of the energy recovery hydraulic cylinder, which piston is movable along the piston rod and separates a space (30) provided in the hollow piston rod and filled with oil from the bottom side (29) of the energy recovery hydraulic cylinder filled with gas, and the space (30) filled with oil comprises a connector (31) for the supply with oil so that the position of the separating piston (28) along the piston rod can be set via the filling amount of the space (30) filled with oil.

2. Piece of working equipment, in particular an excavator or a machine for the transfer of material, having an element (2) movable via at least one working hydraulic cylinder (1), wherein at least one energy recovery hydraulic cylinder (3) is provided for the recovery of energy from the movement of the movable element (2),
wherein the energy recovery hydraulic cylinder (3) is filled with gas at the bottom side and comprises a hollow piston rod (11) open toward the bottom side (12),
**characterized in that**
a separating piston (33) is provided in the ring space (14) of the energy recovery hydraulic cylinder, which piston is movable along the piston rod and separates a part (34) of the ring space (14) filled with gas from a part (35) of the ring space (14) filled with oil, wherein the part (34) of the ring space (14) filled with gas is connected via overflow openings (36) to the bottom side of the energy recovery hydraulic cylinder, and the position of the separating piston (33) along the piston rod can be set via the filling amount of the part (35) of the ring space (14) filled with oil.

3. Piece of working equipment in accordance with claim 1 or 2, wherein the energy recovery hydraulic cylinder (3) comprises a connector (25) at the ring side for the supply of oil via which the ring space (14) of the energy recovery hydraulic cylinder (3) can be and/or is connected to a hydraulic system of the piece of working equipment.

4. Piece of working equipment in accordance with either of claims 1, 2 or 3, wherein the energy recovery hydraulic cylinder (3) comprises a filling valve (17) for the filling with gas and/or a pressure relief valve (18) which are advantageously arranged at the bottom side.

5. Piece of working equipment in accordance with claim 1, wherein the connector (31) for the supply of oil to the space (30) filled with oil is provided in the region of the bearing lug (16) of the piston rod (11).

6. Piece of working equipment in accordance with one of the preceding claims, wherein two or more energy recovery hydraulic cylinders (3) are provided which are oil-hydraulically in operative communication with one another, wherein an energy recovery hydraulic cylinder (3) in accordance with claim 1 advantageously is provided whose space (30) filled with oil is connected to the ring side of a further energy recovery hydraulic cylinder (3).

7. Piece of working equipment in accordance with one of the preceding claims, wherein the energy recovery hydraulic cylinder (3) has at the bottom side a connector for the supply with oil via which the bottom space (12) of the energy recovery hydraulic cylinder (3) can be connected to a hydraulic system of the piece of working equipment, and wherein the energy recovery hydraulic cylinder (3) can be connected via valves (42, 43) to the working hydraulic control of the piece of working equipment and can be charged with oil for the support of the working hydraulic cylinder (1).

8. Piece of working equipment in accordance with one of the preceding claims, wherein the movable element (2) includes a box construction having two side cheeks (50), wherein the energy recovery hydraulic cylinder(s) (3) and/or the working hydraulic cylinder(s) (1) is pivotally connected to the movable element (2) via a pipe (55) connecting the side cheeks (50), and wherein according to one configuration the pipe (55) is guided through cut-outs in the side cheeks (50) and lugs (56) are arranged outside the side cheeks (50) at the pipe (55), at which the working hydraulic cylinders (1) or the energy recovery hydraulic cylinders (3) are pivotally connected, while according to another configuration, the pipe (55) is guided through cut-outs in the side cheeks (50) and the working hydraulic cylinders (1) or the energy recovery hydraulic cylinders (3) are pivotally connected laterally of the side cheeks (50) by means of a bolt (60) guided in the pipe (55).

9. Piece of working equipment in accordance with claim 8, wherein castings (61) for the journaling of a bolt (60) are provided to which the working hydraulic cylinders (1) or the energy recovery hydraulic cylinders (3) are pivotally connected, wherein the castings (61) advantageously are welded to cut-outs in the side cheeks and/or to a pipe (55) guided through cut-outs in the side cheeks.

10. Piece of working equipment in accordance with one of the claims 8 or 9, wherein the box construction furthermore comprises a lower web (51) which is made from at least two metal sheets (51a, 51b) which are welded to the pipe (55), wherein advantageously at least one of the metal sheets comprises cut-outs (58) in the region of the pipe (55) through which lugs (57) are guided for the pivotal connection of the working hydraulic cylinder(s) (1) and/or of the energy recovery hydraulic cylinder(s) (3), wherein the lugs (57) advantageously are welded to the metal sheet or sheets.

11. Piece of working equipment in accordance with one of the claims 8 to 10, wherein the box construction furthermore includes a lower web (51) and the pipe (55) connecting the side cheeks (50) extends below the lower web (51), and wherein the energy recovery hydraulic cylinder(s) (3) and/or the working cylinder(s) (1) are pivotally connected to the pipe (55) between the side cheeks (50) by means of lugs.

12. Piece of working equipment in accordance with one of the preceding claims, wherein the movable element (2) is pivotally connected to a weld construction which includes two side cheeks (70) and a base plate (72) connecting the side cheeks (70), wherein the energy recovery hydraulic cylinder(s) (3) and/or the working hydraulic cylinder(s) (1) are pivotally connected to lugs (73, 74) which are connected to the base plate (72) and, via a transverse metal sheet (75), to the side cheeks (70).

13. Piece of working equipment in accordance with claim 12, wherein the lugs (73, 74) either are welded to the transverse metal sheet (75) or are guided through cut-outs in the transverse metal sheet (75) and are welded at the rear side to a further metal sheet (76) advantageously guided perpendicular to the base plate (72) and to the side cheeks (70).

## Revendications

1. Appareil de travail, en particulier excavatrice ou machine de transvasement de matériau, avec un élément (2) pouvant être déplacé par l'intermédiaire d'au moins un vérin hydraulique de travail (1), dans lequel au moins un vérin hydraulique de récupération d'énergie (3) est prévu pour récupérer de l'énergie à partir du déplacement de l'élément (2) pouvant être déplacé,
dans lequel le vérin hydraulique de récupération d'énergie (3) est rempli côté de fond de gaz et présente une tige de piston (11) creuse ouverte en direction du côté de fond (12),
**caractérisé en ce**
**qu'**est prévu dans la tige de piston creuse du vérin hydraulique de récupération d'énergie un piston de séparation (28) mobile le long de la tige de piston, lequel sépare un espace (30) rempli d'huile prévu dans la tige de piston creuse du côté de fond (29) rempli de gaz du vérin hydraulique de récupération d'énergie et l'espace (30) rempli d'huile présente un raccord (31) pour l'alimentation en huile, de sorte que la position du piston de séparation (28) le long de la tige de piston peut être réglée par l'intermédiaire de la quantité de remplissage de l'espace (30) rempli d'huile.

2. Appareil de travail, en particulier excavatrice ou machine de transvasement de matériau, avec un élément (2) pouvant être déplacé par l'intermédiaire d'au moins un vérin hydraulique de travail (1), dans lequel au moins un vérin hydraulique de récupération d'énergie (3) est prévu pour récupérer de l'énergie à partir du déplacement de l'élément (2) pouvant être déplacé,
dans lequel le vérin hydraulique de récupération d'énergie (3) est rempli côté de fond de gaz et présente une tige de piston (11) creuse ouverte en direction du côté de fond (12),
**caractérisé en ce**
**qu'**est prévu, dans l'espace annulaire (14) du vérin hydraulique de récupération d'énergie un piston de séparation (33) mobile le long de la tige de piston, lequel sépare une partie (34) remplie de gaz de l'espace annulaire (14) d'une partie (35) remplie d'huile de l'espace annulaire (14), dans lequel la partie (34) remplie de gaz de l'espace annulaire (14) est reliée au côté de fond du vérin hydraulique de récupération d'énergie par l'intermédiaire d'ouvertures de trop-plein (36) et la position du piston de séparation (33) peut être réglée le long de la tige de piston par l'intermédiaire de la quantité de remplissage de la partie (35), remplie d'huile, de l'espace annulaire (14).

3. Appareil de travail selon la revendication 1 ou 2, dans lequel le vérin hydraulique de récupération d'énergie (3) présente côté anneau un raccord (25) pour l'alimentation en huile, par l'intermédiaire duquel l'espace annulaire (14) du vérin hydraulique de récupération d'énergie (3) peut être raccordé et/ou est raccordé à un système hydraulique de l'appareil de travail.

4. Appareil de travail selon la revendication 1, 2 ou 3, dans lequel le vérin hydraulique de récupération d'énergie (3) présente une soupape de remplissage (17) pour le remplissage avec du gaz et/ou une soupape de limitation de pression (18), lesquelles sont disposées avantageusement du côté du fond.

5. Appareil de travail selon la revendication 1, dans lequel le raccord (31) pour l'alimentation de l'espace (30) rempli d'huile en huile est prévu dans la zone de l'œillet de montage (16) de la tige de piston (11).

6. Appareil de travail selon l'une quelconque des revendications précédentes, dans lequel sont prévus deux vérins hydrauliques de récupération d'énergie (3) ou plus, lesquels sont en liaison fonctionnelle avec de l'huile hydraulique entre eux, dans lequel est prévu avantageusement un vérin hydraulique de récupération d'énergie (3) selon la revendication 1, dont l'espace (30) rempli d'huile est relié au côté annulaire d'un autre vérin hydraulique de récupération d'énergie (3).

7. Appareil de travail selon l'une quelconque des revendications précédentes, dans lequel le vérin hydraulique de récupération d'énergie (3) présente côté de fond un raccord pour l'alimentation en huile, par l'intermédiaire duquel l'espace de fond (12) du vérin hydraulique de récupération d'énergie (3) peut être raccordé à un système hydraulique de l'appareil de travail et dans lequel au choix le vérin hydraulique de récupération d'énergie (3) peut être relié par l'intermédiaire de soupapes (42, 43) à la commande hydraulique de travail de l'appareil de travail et peut être soumis à l'action d'huile pour le soutien du vérin hydraulique de travail (1).

8. Appareil de travail selon l'une quelconque des revendications précédentes, dans lequel l'élément (2) pouvant être déplacé comprend une structure de boîte avec deux joues latérales (50), dans lequel le ou les vérins hydrauliques de récupération d'énergie (3) et/ou le ou les vérins hydrauliques de travail (1) sont articulés sur l'élément (2) mobile par l'intermédiaire d'un tuyau (55) reliant les joues latérales (50) et dans lequel selon une réalisation, le tuyau (55) est guidé à travers des évidements dans les joues latérales (50) et des brides (56) sont disposées sur le tuyau (55) à l'extérieur des joues latérales (50), sur lesquelles les vérins hydrauliques de travail (1) ou les vérins hydrauliques de récupération d'énergie (3) sont articulés, tandis que selon une autre réalisation, le tuyau (55) est guidé à travers des évidements dans les joues latérales (50) et les vérins hydrauliques de travail (1) ou les vérins hydrauliques de récupération d'énergie (3) sont articulés à côté des joues latérales (50) au moyen d'un boulon (60) guidé dans le tuyau (55).

9. Appareil de travail selon la revendication 8, dans lequel des pièces en fonte (61) sont prévues pour le montage d'un boulon (60), sur lesquelles les vérins hydrauliques de travail (1) ou les vérins hydrauliques de récupération d'énergie (3) sont articulés, dans lequel les pièces en fonte (61) sont soudées avantageusement à des évidements dans les joues latérales et/ou à un tuyau (55) guidé à travers des évidements dans les joues latérales.

10. Appareil de travail selon l'une quelconque des revendications 8 ou 9, dans lequel la structure en caisson présente par ailleurs une membrure inférieure (51), laquelle est fabriquée à partir d'au moins deux tôles (51a, 51b), qui sont soudées au tuyau (55), dans lequel avantageusement au moins une des tôles présente des évidements (58) dans la zone du tuyau (55), à travers lesquels des brides (57) sont guidées de part en part pour l'articulation du ou des vérins hydrauliques de travail (1) et/ou du ou des vérins hydrauliques de récupération d'énergie (3), dans lequel les brides (57) sont soudées avantageusement à la ou aux tôles.

11. Appareil de travail selon l'une quelconque des revendications 8 à 10, dans lequel la structure en caisson comprend par ailleurs une membrure inférieure (51) et le tuyau (55) reliant les joues latérales (50) s'étend sous la membrure inférieure (51), et dans lequel le ou les vérins hydrauliques de récupération d'énergie (3) et/ou le ou les vérins hydrauliques de travail (1) sont articulés entre les joues latérales (50) au moyen de brides sur le tuyau (55).

12. Appareil de travail selon l'une quelconque des revendications précédentes, dans lequel l'élément (2) mobile est articulé sur une structure de soudage, laquelle comprend deux joues latérales (70) et une plaque de fond (72) reliant les joues latérales (70), dans lequel le ou les vérins hydrauliques de récupération d'énergie (3) et/ou le ou les vérins hydrauliques de travail (1) sont articulés sur des brides (73, 74), lesquelles sont reliées à la plaque de fond (72) et par l'intermédiaire d'une tôle transversale (75) aux joues latérales (70).

13. Appareil de travail selon la revendication 12, dans lequel les brides (73, 74) sont soudées soit sur la tôle transversale (75) soit sont guidées à travers des évidements dans la tôle transversale (75) et sont soudées côté arrière à une autre tôle (76) guidée avantageusement de manière perpendiculaire par rapport à la plaque de fond (72) et par rapport aux joues latérales (70).
